# EUROPEAN PATENT APPLICATION

(11) **EP 0 623 503 A1**
(43) Date of publication of application: **09.11.1994**
(21) Application number: 94106931.2
(22) Date of filing: 04.05.1994
(51) Int. Cl.: B62D 65/00, B65C 9/36

(54) **Apparatus and method for applying film to articles**

(30) Priority: 07.05.1993 US 60341
(71) Applicant: MINNESOTA MINING AND MANUFACTURING COMPANY, St. Paul, Minnesota 55133-3427 (US)
(72) Inventor: Mitchell, James G., c/o Minnesota Mining and Man., St. Paul, Minnesota 55133-3427 (US)
(74) Representative: Hilleringmann, Jochen, Dipl.-Ing.

(57) **Abstract**

An apparatus (10) for applying a piece of pressure sensitive adhesive backed film (54) to a surface of a vehicle body member (56) including an application frame (32) having a resilient, porous member (40) mounted thereon. A vacuum source (30) is coupled to a vacuum chamber (38) of the application frame (32). The vacuum source (30) draws air through the resilient member (40) and into the vacuum chamber (38) to create vacuum pressure at an exterior surface (58) of the resilient member (40). The vacuum pressure is sufficient to hold the film adhesive side (73) exposed to the resilient member (40) during manipulation of the application frame (32), but is insufficient once the adhesive side (73) of the film (54) contacts the surface of the vehicle body member (56) and film (54) is applied to the body member (56). Once the film (54) is applied, the film (54) is buffed using a plurality of rollers (83,85) that contact surface portions of the film (54) to insure uniform contact between the film (54) and the body member (56).

## Description

### TECHNICAL FIELD

The present invention relates generally to an apparatus and method for evenly applying a strip or web of material such as film to a surface of an object whether the surface is flat, contoured, otherwise irregular or a combination thereof. In particular, the present invention is an apparatus and method for applying a strip of protective pressure sensitive adhesive backed film to vehicle body panels, and specifically to a top edge of a pickup truck tailgate.

### BACKGOUND OF THE INVENTION

Typically, to apply a pressure sensitive adhesive backed film in the form of accent striping, simulated wood paneling, clear protective striping, etc. to a vehicle body is a labor intensive, time consuming process. The process is largely hand work, usually requiring more than one person to prepare the film and apply it to a vehicle body member in the correct orientation. To prepare the piece of film to be applied, the film is either held by one or more people or is placed on a suitable support surface adhesive side exposed. Moreover, it is known to apply an alcohol and water based fluid medium to the exposed adhesive side of the film in order to temporarily reduce the adhesive attraction of the pressure sensitive adhesive. This makes the film easier to handle since the adherent property of the pressure sensitive adhesive is less susceptible to being adversely affected due to unwanted contact with people or objects. The alcohol and water based fluid medium may also be applied to the surface of the vehicle body member to which the film is to be applied. The alcohol and water based fluid medium is applied using a suitable spray system.

After the alcohol and water based fluid medium is applied to the film and to the vehicle body member, one or more people (depending upon the size and awkwardness of the piece of film) manually apply the film on the vehicle body member with the pressure sensitive adhesive side of the film in contact with the surface of the body member. Due to the hand work nature of applying the piece of film on the surface of the body member, initially, the film is usually only in the approximate desired location and orientation on the body member. The alcohol and water based fluid medium that was previously applied on the adhesive side of the film and the surface of the body member allows some degree of adjustment of the film relative to the body member to achieve the desired location and orientation of the piece of film on the body member. With the film now applied to the surface of the body member, plastic squeegees and felt blocks are typically used to push air bubbles and the alcohol and water based fluid medium out from between the film and the surface of the body member. This final procedure is intended to insure permanent, uniform pressure sensitive adhesive contact between the film and the vehicle body member once all of the fluid medium has evaporated.

Due to the mostly manual nature of this process for applying a piece of pressure sensitive adhesive backed film to the surface of a vehicle body member, the process is tedious, cumbersome and time consuming. In addition, the hand work required by one or more people to apply a piece of film to the vehicle body member is not conducive to the accurate positioning of the film on the surface of the body member. Although the use of a alcohol and water based fluid medium allows some adjustment of the film relative to the surface of the body member once applied, the limited character of this leeway is highly dependent upon the quantity and coverage of alcohol and water based fluid medium between the film and the surface of the body member. Hence, some areas of the film are susceptible to adhering to the surface of the body member on contact, thereby not allowing any further alignment adjustment once initial contact between the film and the body member has been effected. This drawback not only results in a misaligned piece of film but can also cause air bubbles to be trapped between the surface of the body member and the piece of film. The trapped air bubbles and misalignment being both unacceptable and unsightly.

There is a need for an apparatus and a method for applying a piece of pressure sensitive adhesive backed film to the surface of a vehicle body member that is efficient and uncomplicated. Specifically, the application apparatus should permit the film to be applied to the surface of a vehicle body member quickly and with alignment accuracy while minimizing trapped air bubbles. In addition, the application method should not be hand work intensive, cumbersome or tedious.

### SUMMARY OF THE INVENTION

The present invention is an apparatus and method for applying a strip or web of material to a surface of an article that overcomes the above-described problems and disadvantages. In particular, the apparatus and method of the present invention provide for the accurate alignment of such a piece of film or the like to the surface of articles even when the surface is irregularly shaped including complex contours and the like. Moreover, such a piece of film or the like can be smoothly applied to effectively eliminate trapped air bubbles.

The application apparatus in accordance with the present invention preferably includes an application frame having a vacuum chamber, an inlet portion and an outlet portion. The inlet and outlet portions are in air flow communication with the vacuum chamber. A resilient, porous member is mounted on the application frame over the inlet portion to the vacuum chamber. The resilient, porous member is configured to support the strip of material to be applied to the surface of the object and may further preferably include an alignment means to accurately position the strip of material. A vacuum source is coupled to the outlet portion to the vacuum chamber. The vacuum source draws a flow of air through the resilient, porous member and into the vacuum chamber to create vacuum pressure at an exterior surface of the resilient, porous member. The vacuum pressure is sufficient to hold the strip of material to the resilient, porous member, but is preferably insufficient to hold the strip of material to the resilient, porous member upon the strip of material contacting the surface of the object. Thus, upon the application of the strip of material against the surface of the object, the strip of material is transferred to the surface of the object from the resilient, porous member. Alternately, the vacuum pressure could be reduced or eliminated during transfer, depending on the adherence of the strip of material to the surface of the object.

The exterior surface of the resilient, porous member preferably has a convex shape such that the strip of material, such as a piece of pressure sensitive adhesive backed film, is gradually applied to the surface of the object as the resilient member is urged against the object. The film is gradually applied to the object, such as a vehicle body member, from an initial line of contact that spreads outward in both directions from the contact line so as to substantially prevent air from being trapped between the surface of the body member and the piece of film. Other exterior shapes can be used depending on the surface contour of the object. Preferably, in any case, the strip of material is to be applied from an initial line of contact that spreads in at least one direction from the contact line as the resilient member is urged against the object.

An alignment assembly is also preferably mounted on the application frame and preferably includes a plurality of spaced, retractable alignment pins. The pins in their extended state are positioned to contact a peripheral edge of the piece of film to align the film relative to the external surface of the resilient, porous member.

It is also preferable to include a distribution mechanism with the application apparatus for distributing a fluid medium onto an exposed adhesive surface of the piece of film after the film has been aligned and prior to the film contacting the surface of the object, such as a vehicle body member. Moreover, a dispensing mechanism is preferably mounted on the application frame for dispensing a like fluid medium on to the surface of the body member prior to the piece of film contacting the body member.

After the film has been applied to the surface of the body member, a plurality of buffing rollers, also preferably mounted on the application frame, are controlled to roll along surface portions of the piece of film to insure uniform smooth contact between the film and the surface of the vehicle body member.

This application apparatus and method of application are relatively uncomplicated. The application apparatus and method allow pressure sensitive adhesive backed film to be applied to the surface of a vehicle body member quickly and efficiently while minimizing trapped air bubbles and insuring alignment accuracy. In addition, the application apparatus reduces the hand work normally required to apply a piece of film to the surface of a vehicle body member, thus resulting in a less tedious application process.

### BRIEF DESCRIPTION OF THE DRAWINGS

FIG. 1 is a perspective view of an application apparatus in accordance with the present invention with a pickup truck tailgate positioned adjacent thereto.

FIG. 2 is a sectional view taken along line 2-2 in FIG. 1.

FIG. 3 is a sectional view taken along line 3-3 in FIG. 1 with the tailgate positioned within the apparatus and illustrating a distribution system of the application apparatus.

FIG. 4 is a sectional view similar to FIG. 3 illustrating a dispensing system of the application frame.

FIG. 5 is a sectional view similar to FIG. 3 of a resilient, porous member of the application frame applying a piece of pressure sensitive adhesive backed film to a top edge of the pickup truck tailgate.

FIG. 6 is a sectional view similar to FIG. 3 of a first section of a buffing apparatus aligned above the film applied to the top edge of the tailgate.

FIG. 7 is a sectional view similar to FIG. 6 of the first section of the buffing apparatus buffing first portions of the film applied to the top edge of the tailgate.

FIG. 8 is a sectional view similar to FIG. 3 of a second section of the buffing apparatus buffing second portions of the film applied to the top edge of the tailgate.

### DETAILED DESCRIPTION OF THE PREFERRED EMBODIMENTS

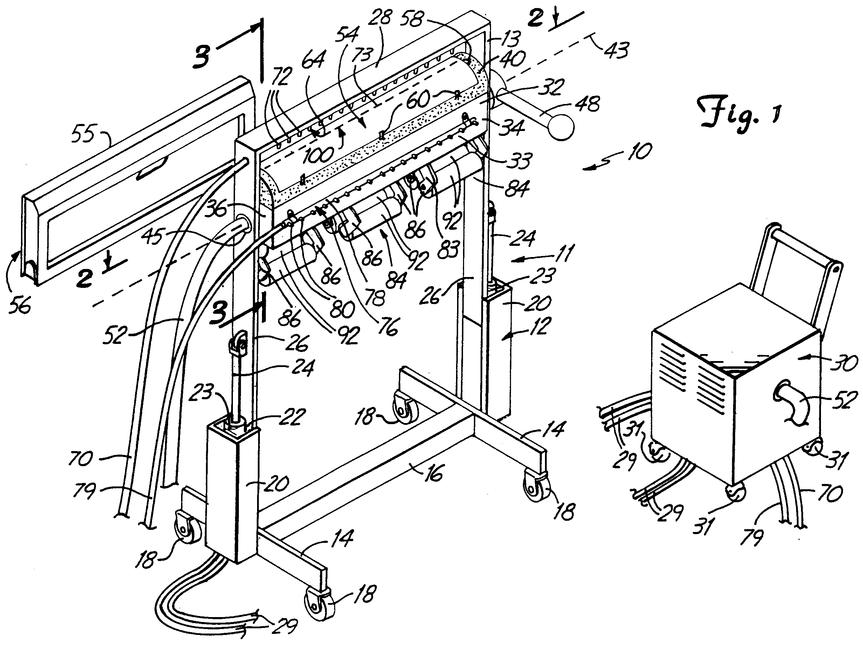

An application apparatus 10 in accordance with the present invention is illustrated generally in FIG. 1. The illustrated apparatus 10 includes a support assembly 11 defined by a lower support mechanism 12 and an upper support mechanism 13. The lower support mechanism 12 includes first and second, spaced support elements 14 rigidly connected together by a cross element 16. The first and second support elements 14 each include a pair of spaced castors 18 for portability of the support assembly 11. As seen in FIG. 1, each of the first and second support elements 14 further includes a rigid, upright, preferably U-shaped support element 20.

Each support element 20 houses a pneumatic lift member 22 comprising a cylinder body 23 and an extensible rod 24. As seen in FIG. 1, the cylinder bodies 23 are coupled to the lower support mechanism 12 and the extensible rods 24 are coupled to upright support members 26 of the upper support mechanism 13. The upright support members 26 are further rigidly connected to one another by way of a cross member 28. The lift members 22 are conventionally coupled to a compressor/vacuum power source 30 via suitable hose lines 29. The compressor/vacuum power source 30 is preferably also mounted on castors 31 and provides air pressure to the lift members 22 to move the extensible rods 24 relative to the cylinder bodies 23 to raise and lower the upper support mechanism 13 relative to the lower support mechanism 12.

It is understood that many other support assemblies are contemplated and other conventional lift mechanisms could be substituted for the pneumatic cylinders 22 including mechanical devices such as lead screws, etc., or other hydraulic or pneumatic devices that may be power driven or manually driven.

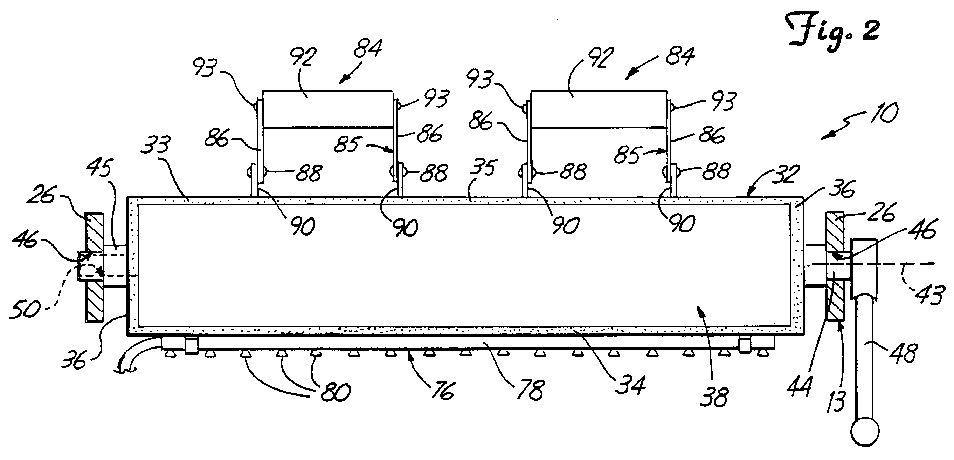

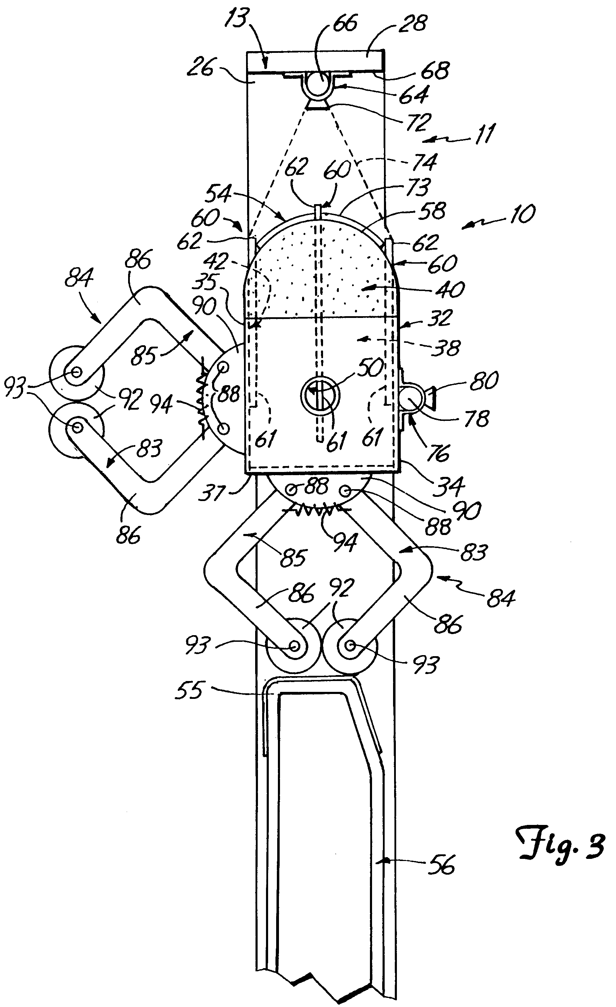

In accordance with the preferred embodiment, the upper support mechanism 13 of the application apparatus 10 includes a rotatable application frame 32. As seen best in FIG. 2, the application frame 32 includes an open top vessel 33 defined by first and second side walls 34 and 35, respectively, end walls 36 and a bottom wall 37 (see FIGS. 3-8). The vessel 33 defines a vacuum chamber 38. A resilient, porous member 40 is mounted on the application frame 32 over the open top or inlet portion 42 (see FIG. 3) of the vessel 33. The inlet portion 42 is in air flow communication with the vacuum chamber 38. In one preferred embodiment, the resilient, porous member is a piece of open cell foam such as polyurethane ester foam.

As seen best in FIGS. 1 and 2, the application frame 32 is mounted to the upper support mechanism 13 for rotational movement about a longitudinal axis 43. For this purpose, the end walls 36 include stub shafts 44 and 45 which are received for rotational movement in openings 46 (see FIG. 2) in the upright support members 26. A lever arm 48 is rigidly connected to the stub shaft 44 for causing rotation of the application frame 32 about the longitudinal axis 43 upon manual manipulation of the lever arm 48. The application frame 32 could otherwise be driven about it axis 43 by conventional drive means if desired. The stub shaft 45 includes a through opening or outlet portion 50 in air flow communication with the vacuum chamber 38. As seen best in FIG. 1, the outlet portion 50 from the vacuum chamber 38, is coupled to the compressor/vacuum power source 30 via a suitable hose line housed within conduit 52.

In accordance with the method of the present invention, the resilient, porous member 40 mounted on the application frame 32 supports a strip of material. According to a preferred method, the strip of material is preferably a piece of clear, protective, pressure sensitive adhesive backed film 54, to be applied to a surface of an object. Other papers, foils, films, and the like could also be applied by the subject apparatus such as those not employing a pressure sensitive adhesive, for example, SCOTCH™ brand tint film. The object, on the other hand, to which such a strip of material film is applied could be a refrigerator door, a helicopter blade, a car hood, etc. However, according to one preferred use, the object is a vehicle body member, such as a pickup truck tailgate 56 and the surface preferably is a top edge 55 of the tailgate 56. The compressor/vacuum power source 30, coupled to the outlet portion 50 of the vacuum chamber 38, draws a flow of air through the resilient, porous member 40 and into the vacuum chamber 38 to create vacuum pressure at an exterior surface 58 of the resilient porous member 40.

The vacuum pressure is sufficient to hold the piece of film 54 to the exterior surface 58 of the resilient, porous member 40 in any orientation of the application frame 32. However, the vacuum pressure is preferably insufficient to hold the piece of film 54 on the resilient, porous member 40 once the piece of film 54 is applied to the top edge 55 of the tailgate 56, such that upon contact, the piece of film 54 is transferred to the top edge 55 of the tailgate 56. Otherwise, the vacuum source 30 could be controlled automatically or manually to reduce or eliminate the vacuum pressure at the surface 58 of the resilient, porous member 40 during the transfer. Preferably, the compressor/vacuum power source 30 provides between eight to twelve atmospheres of vacuum pressure to permit such holding and transfer when the film has a conventional pressure sensitive adhesive on the exposed surface, and more preferably approximately ten atmospheres of vacuum pressure.

The resilient, porous member 40 is preferably shaped in transverse cross-section to provide a convex external surface 58, see Figure 3. More preferably, the external surface 58 comprises an arc segment of a cylinder of about 180°. The shape of the external surface 58 is important in that it is desired to apply the strip of material, such as the piece of film 54, initially along a line of contact to the object, such as tailgate 56, and then from the line of contact toward the edges of the material as the resilient member 40 is urged further against the object.

It is understood, however, that such application is not only dependent on the shape of the external surface 58, but also on the shape of the surface of the object to which the material is to be applied. In the case of a flat surface of an object, the external surface 58 could be planar in transverse cross-section but inclined relative to the object surface. On the other hand, if the object surface is continuously curved, or otherwise contoured, a flat external surface 58 would suffice. The cylindrical surface, as illustrated, is preferred in that it will work in almost all circumstances, except of course on a concave mirror image surface. It is also noted that it is not critical where the line of contact first occurs; that is, it could begin at one edge of the strip of material and work to the other edge, or it could start intermediate both longitudinal edges and work to both edges at the same time.

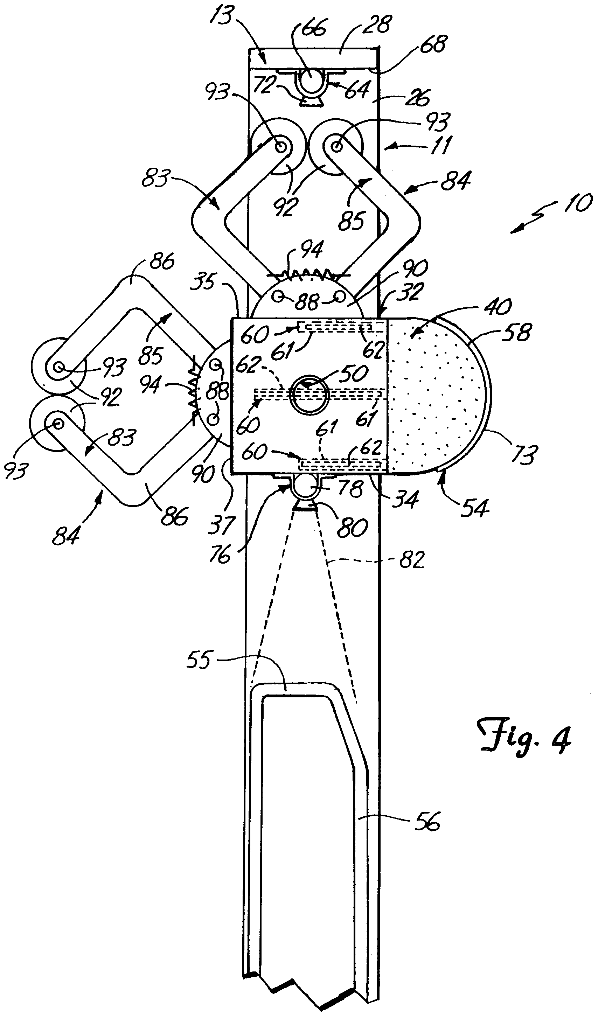

As seen best in FIGS. 1, 3 and 4, the application frame 32 also preferably includes an aligning system defined by a plurality of spaced, retractable alignment mechanisms 60. The alignment mechanisms 60 are not shown in FIG. 2 for clarity. Each alignment mechanism 60 includes a cylinder body 61 and an extensible alignment pin 62. The cylinder bodies may be conventionally mounted to the application frame 32 to its side walls 34 and 35, the end walls 36, the bottom wall 37, or a combination thereof. In any case, appropriate passage through the resilient, porous member 40 is provided for each pin 62. Moreover, each pin 62 is preferably retractable completely within the application frame 32 so as not to interfere with the film applicator as described below. The alignment mechanisms 60 are conventionally coupled to and controlled by the compressor/vacuum power source 30 via suitable hose lines also preferably housed within conduit 52. The compressor/vacuum power source 30 provides air pressure to the alignment mechanisms 60 to move the extensible alignment pins 62 relative to the cylinder bodies 61. The extensible alignment pins 62 are movable between an extended state, (see FIGS. 1 and 3) and a retracted state (see FIG. 4). In the extended state, the alignment pins 62 extend above the exterior surface 58 of the resilient, porous member 40 to contact a peripheral edge of the piece of film 54 to align the film 54 relative to the resilient, porous member 40. In the retracted state, the alignment pins 62 are retracted beneath the exterior surface 58 of the resilient, porous member 40. The alignment pins 60 are appropriately positioned to align the piece of film 54 relative to the resilient, porous member 40 such that upon the application of the piece of film 54 to the top edge 55 of the tailgate 56, the piece of film 54 is accurately aligned in the desired orientation on the tailgate 56. Other alignment means may be used as long as they do not interfere with the film application, as described below.

As seen best in FIGS. 1 and 3, the upper support mechanism 13 also includes a distribution system 64. The distribution system 64 includes a spray bar 66 mounted on a lower surface 68 of the cross member 28 and also conventionally coupled to the compressor/vacuum power source 30 via a suitable hose line 70. The spray bar 66 has a plurality of spaced spray nozzles 72 through which a fluid medium is distributed from a reservoir (not shown) within the compressor/vacuum power source 30. Of course, the fluid reservoir and a pump system could be separately provided. Again, the fluid medium is preferably an alcohol and water based fluid medium 74 (see Figure 3) that is distributed on an exposed surface comprising a pressure sensitive adhesive side 73 of the piece of film 54. The fluid medium 74 is applied to the adhesive side 73 of the piece of film 54 prior to the application of the film 54 to the top edge 55 of the tailgate 56. The alcohol and water based fluid medium 74 temporarily reduces the adhesive attraction of the pressure sensitive adhesive on the adhesive side 73 of the film 54. Preferably, the alcohol and water based fluid medium 74 is a 30/70 mixture of alcohol/water.

As seen best in FIGS. 1, 2 and 4, the application frame 32 also preferably includes a dispensing system 76. The dispensing system 76 includes a spray bar 78 mounted on the first side wall 34 of the vessel 33 and is also conventionally coupled to the compressor/vacuum power source 30 or another source via a suitable hose line 79. The spray bar 78 has a plurality of spaced spray nozzles 80 through which a fluid medium is distributed from a reservoir (not shown) within the compressor/ vacuum power source 30. The fluid medium is preferably an alcohol and water based fluid medium 82 that for distribution on the surface of the object and particularly on the top edge 55 of the tailgate 56. The fluid medium 82 is applied to the tailgate 56 prior to the application of the film 54 to the top edge 55 of the tailgate 56. The alcohol and water based fluid medium 82 temporarily reduces the adhesive attraction of the pressure sensitive adhesive on the adhesive side 73 of the film 54. Preferably, the alcohol and water based fluid medium 82 is preferably a 30/70 mixture of alcohol/water.

Further in accordance with the preferred embodiment, the application frame 32 further includes a plurality of buffing mechanisms 84. As seen best in FIGS. 1 and 2, three similar buffing mechanisms 84 are mounted to the bottom wall 37 of the application frame 32 and two buffing mechanisms 84 are mounted to the side wall 35 of the application frame 32. The buffing mechanisms 84 on the side wall 35 are also preferably similar to those on the bottom wall 37 and are oriented such that their medians are between adjacent buffing mechanisms on the bottom wall 37 to ensure complete buffing, as described below. Alternately, the complete buffing could be done by more or less of such buffing mechanisms positioned on one or more side stations of the application frame 32. A single, mechanism extending over the length covered by the above-noted five mechanisms could be mounted to one wall of the application frame 32 instead, for example.

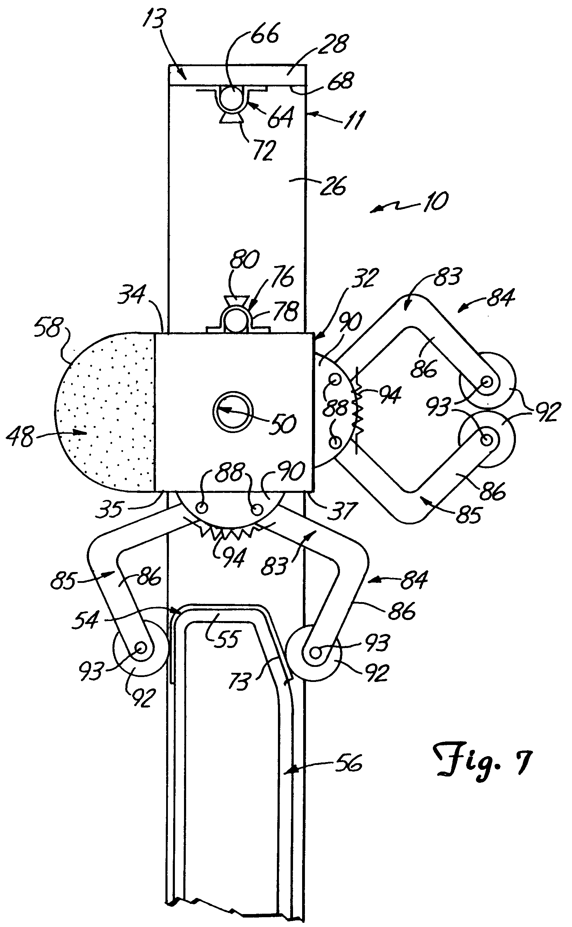

Each buffing mechanism 84 includes first and second roller assemblies 83 and 85, respectively, with each roller assembly 83 and 85 having a pair of spaced support arms 86. The support arms 86 are pivotally attached at first ends via pins 88 to spaced support brackets 90 mounted on the application frame 32. A roller 92, formed for example from polyurethane plastic, is rotatably mounted between second ends of the spaced support arms 86 via pins 93. A coil spring 94 connected between the support arms 86 of the first and second roller assemblies 83 and 85 biases the rollers 92 toward one another (see FIGS. 3 and 7). After the piece of film 54 has been applied to the top edge 55 of the tailgate 56, the rollers 92 are rolled along surface portions of the piece of film 54 to press the surface portions of the film 54 against the tailgate 56 to insure uniform contact between the adhesive side 73 of the film 54 and the top edge 55 of the tailgate 56.

It is understood that such buffing mechanisms can be modified in accordance with the desired application, or may even be eliminated. Moreover, each may comprise one or more of such buffing rollers, and may be operatively connected in a variety of well-known ways. Additionally, the buffing rollers 92 could be replaced with other elements such as rubber or plastic squeegees or with felt blocks, or the like. Although not necessary, it is preferable, however, that some type of buffing mechanism be provided to smooth down the film and eliminate air bubbles, especially when the applied film comprises a pressure-sensitive adhesive surface that is treated, as above, to permit adjustable positioning. It is also noted that such distribution and dispensing systems, described above, need not be provided, but are preferable in the case of a film with a pressure-sensitive adhesive surface.

With reference to one specific method in accordance with the present invention for application of a piece of film 54 to the top edge 55 of a tailgate 56, the method is as follows: The compressor/vacuum power source 30 is actuated to move the alignment pins 62 to the extended state (see FIGS 1 and 3). The piece of film 54 is then placed on the exterior surface 58 of the resilient, porous member 40, adhesive side 73 exposed, such that the periphery of the film 54 is in contact with the alignment pins 62 and therefore aligned with the resilient, porous member 40. With the piece of film 54 aligned, the compressor/vacuum power source 30 is then actuated to draw a flow of air through the resilient, porous member 40 and into the vacuum chamber 38 to create vacuum pressure at the exterior surface 58 of the resilient, porous member 40. The vacuum pressure is sufficient to hold the piece of film 54 to the resilient, porous member 40 in any orientation of the application frame 32. Once the vacuum pressure is established, the compressor/vacuum power source 30 is then actuated to move the alignment pins 62 to the retracted state. The retracted state of the alignment pins 62 is shown in FIG. 4.

Next, with the exterior surface 58 of the resilient porous member 40 positioned beneath the distribution system 64, the compressor/vacuum power source 30 is actuated to deliver a quantity of alcohol and water based fluid medium 74 to the adhesive side 73 of the piece of film 54 (see FIG. 3). The application frame 32 is then rotated clockwise (as viewed in FIGS. 3-8) approximately ninety degrees to position the dispensing system 76 over the top edge 55 of the tailgate 56. As seen in FIG. 4, the compressor/vacuum power system 30 is then actuated to deliver a quantity of alcohol and water based fluid medium 82 to the top edge 55 of the tailgate 56. The alcohol and water based fluid mediums 74 and 82 temporarily reduce the adhesive attraction of the pressure sensitive adhesive on the adhesive side 73 of the film 54.

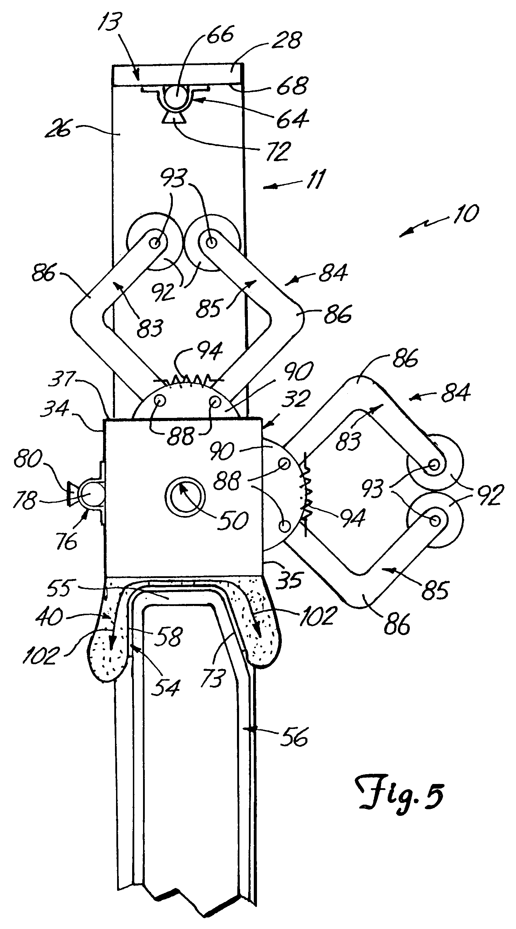

Next, the compressor/vacuum power source 30 is actuated to retract the extensible rods 24 of the lift members 22 to lower the upper support mechanism 13 and therewith the application frame 32. As seen in FIG. 5, as the application frame 32 is lowered, the piece of film 54 on the exterior surface 58 of the resilient, porous member 40 is applied to the top edge 55 of the tailgate 56 with the adhesive side 73 in contact with the top edge 55. Because of the convex contoured shape of the exterior surface 58 of the resilient, porous member 40, the piece of film 54 is applied to the top edge 55 of the tailgate 56 in a gradual manner from an initial line of contact (represented by dashed line 100 in FIG. 1) that spreads outward in either direction (represented by directional arrows 102 in FIG. 5) from the contact line 100 so as to substantially prevent air from being trapped and the formation of air bubbles between the top edge 55 of the tailgate 56 and the piece of film 54. The resilient nature of the resilient, porous member 40 allows the resilient, porous member 40 to conform to many varied complex, curved shapes.

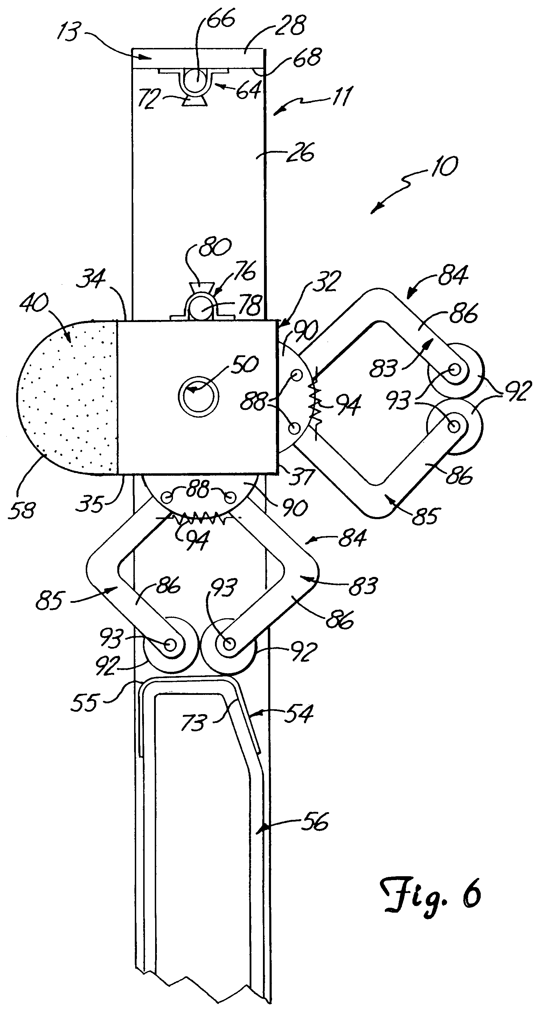

Next, the compressor/vacuum power source 30 is actuated to extend the extensible rods 24 of the lift members 22 to raise the upper support mechanism 13 and therewith the application frame 32 to bring the resilient, porous member 40 out of contact with the top edge 55 of the tailgate 56. The vacuum pressure at the exterior surface 58 of the resilient, porous member 40 is insufficient to hold the piece of film 54 to the resilient, porous member 40 once the film 54 contacts the tailgate 56, because the adhesive attraction of the pressure sensitive adhesive is greater than the holding power of the vacuum pressure. Once the piece of film 54 is applied, the compressor/vacuum power source is deactivated and the vacuum pressure ceases. As seen in FIG. 6, the application frame 32 is once again rotated clockwise approximately ninety degrees to position the two buffing mechanisms 84 on the side wall 35 over the top edge 55 of the tailgate 56. Next, the compressor/vacuum power source 30 is actuated to retract the extensible rods 24 of the lift members 22 to lower the upper support mechanism 13 and therewith the application frame 32. As seen in FIG. 7, as the application frame 32 is lowered, the rollers 92 of the first and second roller assemblies 83 and 85 on the side wall 35 roll along surface portions of the piece of film 54 in opposite directions against the bias of springs 94. The rollers 92 press the surface portions of the film 54 against the tailgate 56 to insure uniform contact between the adhesive side 73 of the film 54 and the top edge 55 of the tailgate 56.

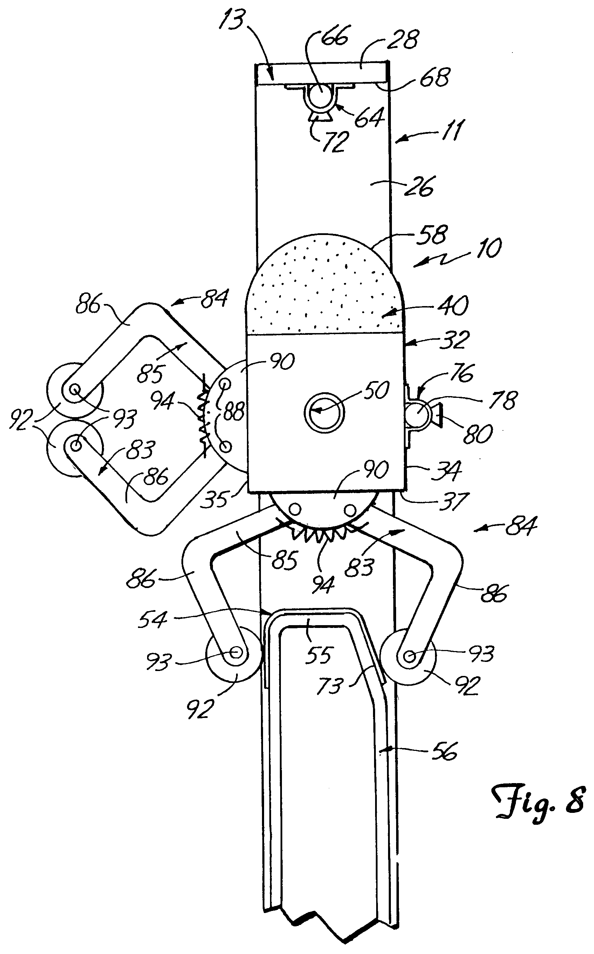

The compressor/vacuum power source 30 is then actuated to extend the extensible rods 24 of the lift members 22 to raise the upper support mechanism 13 and therewith the application frame 32 to bring the two buffer mechanisms 84 on the side wall 35 out of contact with the top edge 55 of the tailgate 56. Next, the application frame 32 is again rotated clockwise approximately ninety degrees to position the three buffing mechanisms 84 on the bottom wall 37 over the top edge 55 of the tailgate 56. Next, the compressor/vacuum power source 30 is actuated to retract the extensible rods 24 of the lift members 22 to lower the upper support mechanism 13 and therewith the application frame 32. As seen in FIG. 8, as the application frame 32 is lowered, the rollers 92 of the first and second roller assemblies 83 and 85 on the bottom wall 37 roll along surface portions of the piece of film 54 in opposite directions against the bias of springs 94. The rollers 92 press the surface portions of the film 54 against the tailgate 56 to insure uniform contact between the adhesive side 73 of the film 54 and the top edge 55 of the tailgate 56. The rollers 92 on the bottom wall 37 contact those surface portions of the film 54 not contacted by the rollers 92 on the side wall 35. The buffing steps insure uniform contact by virtually eliminating any remaining air bubbles and fluid medium 74 and 82 trapped between the film 54 and the tailgate 56.

Next, the compressor/vacuum power source 30 is actuated to extend the extensible rods 24 to raise the application frame 32 to remove the three buffer mechanisms 84 on the bottom wall 35 from contact with the top edge 55 of the tailgate 56. To complete the application process, the application frame 32 is rotated clockwise approximately ninety degree back to the position shown in FIGS. 1 and 3.

This application apparatus 10 and method of application are relatively uncomplicated. The application apparatus 10 and method allow pressure sensitive adhesive backed film 54 to be applied to the surface of a vehicle body member quickly and efficiently while minimizing trapped air bubbles and insuring alignment accuracy. In addition, the application apparatus 10 reduces the hand work normally required to apply a piece of film 54 to the surface of a vehicle body member, thus resulting in a less tedious application process.

Although the present invention has been described with reference to preferred embodiments, workers skilled in the art will recognize that changes may be made in form and detail without departing from the spirit and scope of the invention. For example, instead of the use of vacuum pressure to hold the piece of film 54 on the resilient, porous member 40, a static charge, mechanical clips or pins, low tack or repositionable adhesive, positive air pressure or, in some instances, gravity may be used to hold the film 54 on the resilient porous member 40. It is noted, that with the use of the other types of holding systems, it would not be necessary that the resilient member 40 be porous. Accordingly, many other types of resilient materials could be utilized along with the variety of shapes for the resilient member 40, as discussed above.

## Claims

1. An apparatus for applying a strip of material to a surface of an object, comprising:
- an application frame,
- a resilient member mounted on the application frame, the resilient member being configured to support a strip of material to be applied to a surface of an object, and
- means for holding the strip of material on an exterior surface of the resilient member, and for permitting the application of the strip of material to the surface of the object from the resilient member upon the strip of material contacting the surface of the object.

2. The application apparatus according to claim 1 characterized in that the application frame includes a vacuum chamber, an inlet portion and an outlet portion, the inlet and outlet portions being in air flow communication with the vacuum chamber.

3. The application apparatus according to claim 2 characterized in that the resilient member is a resilient, porous member mounted on the application frame over the inlet portion to the vacuum chamber.

4. The application apparatus according to claim 3 characterized in that the holding means includes a vacuum source coupled to the outlet portion to the vacuum chamber, the vacuum source drawing a flow of air through the resilient, porous member and into the vacuum chamber to create vacuum pressure at an exterior surface of the resilient, porous member, the vacuum pressure being sufficient to hold the strip of material to the resilient, porous member, but insufficient to hold the strip of material to the resilient, porous member upon the strip of material contacting the surface of an object such that the strip of material is applied to the surface of the object from the resilient, porous member.

5. The application apparatus according to claim 4 characterized in that the resilient porous member is a piece of open cell foam.

6. The application apparatus according to claim 4 or 5 characterized in that the exterior surface of the resilient, porous member is of a curved contoured shape.

7. The application apparatus according to claim 6 characterized in that the curved contoured shape is convex such that the strip of material is gradually applied to the surface of an object from an initial line of contact that spreads outward in either direction from the contact line so as to prevent air from being trapped between the surface of the object and the strip of material.

8. The application apparatus according to any one of claims 1 to 7 characterized by means connected to the application frame for distributing a fluid medium to an exposed surface of the strip material adapted to contact the surface of an object prior to the strip of material contacting the object.

9. The application apparatus according to any one of claims 1 to 8 characterized in that the application frame further includes:
- means for dispensing a fluid medium to the surface of an object prior to the strip of material contacting the object.

10. The application apparatus according to any one of claims 1 to 9 characterized in that the application frame further includes:
- means for aligning the strip of material relative to the resilient member such that upon the strip of material contacting the surface of an object, the strip of material is applied in a desired orientation.

11. The application apparatus according to claim 10 characterized in that the alignment means includes a plurality of spaced, alignment pins configured to contact a peripheral edge of the strip of material to align the strip of material relative to the resilient member.

12. The application apparatus according to claim 11 characterized in that each of the alignment pins includes:
- a retracting mechanism for moving the respective alignment pin between an extended state wherein the alignment pin extends above the exterior surface of the resilient member to align the strip of material relative to the resilient member, and a retracted state wherein the alignment pin is retracted beneath the exterior surface of the resilient member.

13. The application apparatus according to any one of claims 1 to 12 characterized in that the application frame further includes:
- means for buffing the strip of material subsequent to the strip of material having been applied to the surface of an object via the resilient member, the buffing means contacting the strip of material to insure uniform contact between the strip of material and the surface of the object.

14. The application apparatus according to claim 13 characterized in that the buffing means includes:
- at least one buffing mechanism including a plurality of rollers configured to roll along a surface portion of the strip of material to press the surface portion of the strip of material against the surface of an object to insure uniform contact between the strip of material and the surface of the object.

15. The application apparatus according to claim 13 or 14 characterized in that the buffing means includes:
- at least one buffing mechanism including:
- first and second roller assemblies, each roller assembly having a pair of spaced support arms pivotally attached at first ends to the application frame and a roller rotatably mounted between second ends of the pair of spaced support arms, each roller being configured to roll along a surface portion of the strip of material to press the surface portion of the strip of material against the surface of an object to insure uniform contact between the strip of material and the surface of the object.

16. The application apparatus according to any one of claims 9 to 15 as far as depending on claim 8 characterized in that the strip of material is a piece of pressure sensitive adhesive backed film, wherein the exposed surface is that surface of the film having pressure sensitive adhesive thereon, and wherein the fluid medium distribution means includes:
- a plurality of spray nozzles adapted to distribute a quantity of an alcohol and water based fluid medium on the pressure sensitive adhesive surface of the film, the alcohol and water based fluid medium acting to temporarily reduce the adhesive attraction of the pressure sensitive adhesive as the film is applied to the surface of the object from the resilient, porous member.

17. The application apparatus according to claim 16 characterized in that the object is a tailgate of a pickup truck and the surface is a top edge of the tailgate, and wherein the application frame further includes:
- a plurality of spray nozzles adapted to distribute a water and alcohol based fluid medium to the top edge of the tailgate prior to the film contacting the tailgate.

18. The application apparatus according to any one of claims 1 to 17 characterized by a support assembly and a means on the support assembly for rotatably supporting the application frame.

19. A method of applying a strip of material to a surface of an object comprises the steps of:
- loading a strip of material onto a resilient member mounted on an application frame,
- actuating a means for holding the strip of material to the resilient member, and
- effecting contact between the strip of material held on the resilient member and a surface of an object such that the strip of material is applied to and transferred to the surface of the object from the resilient member.

20. The method according to claim 19 characterized in that the resilient member is porous and the actuating step includes the step of
- actuating a vacuum source to draw a flow of air through the resilient, porous member to create a vacuum pressure at an exterior surface of the resilient, porous member sufficient to hold the strip of material to the resilient, porous member.

21. The method according to claim 19 or 20 characterized in that the loading step includes the step of
- aligning the strip of material on the exterior surface of the resilient member using retractable alignment pins of the application frame as a guide.

22. The method according to any one of claims 19 to 21 characterized by the step of
- distributing a quantity of alcohol and water based fluid medium on an exposed surface of the strip of material subsequent to the actuating step.

23. The method according to claim 22 characterized by the step of
- dispensing a quantity of alcohol and water based fluid medium on the surface of the object subsequent to the distributing step.

24. The method according to claim 23 characterized by the step of
- buffing the strip of material with rollers to insure uniform contact between the strip of material and the surface of the object.

25. The method according to any one of claims 18 to 25 as far as depending on claim 19 characterized by the step of
- defining the strip of material as a piece of pressure sensitive adhesive backed film, and defining the object as a vehicle body member.

26. The method according to any one of claims 18 to 25 as far as depending on claim 19 characterized by the step of
- defining exterior surface of the resilient, porous member as a convex shape such that the strip of material is gradually applied to the surface of the object from an initial line of contact that spreads outward in either direction from the contact line so as to prevent air from being trapped between the surface of the object and the strip of material.
